# EUROPEAN PATENT APPLICATION

(11) **EP 2 637 471 A1**
(43) Date of publication of application: **11.09.2013**
(21) Application number: 11847985.6
(22) Date of filing: 15.12.2011
(51) Int. Cl.: H04W 88/04, G06F 3/048

(54) **METHOD FOR UNLOCKING TOUCH-SCREEN CELL PHONE, AND TOUCH-SCREEN CELL PHONE**

(30) Priority: 15.12.2010 CN 201010605761
(71) Applicant: Huawei Device Co., Ltd., Longgang District Shenzhen Guangdong 518129 (CN)
(72) Inventor: ZHU, Guangrui, Shenzhen Guangdong 518129 (CN); LIU, Weijie, Shenzhen Guangdong 518129 (CN)
(74) Representative: Lord, Michael
(86) International application number: PCT/CN2011/084087
(87) International publication number: WO 2012/079530

(57) **Abstract**

Embodiments of the present invention provide a method for unlocking a touch screen mobile phone and the touch screen mobile phone. The method mainly includes: when locking a screen of the touch screen mobile phone, displaying one or more application icons generated according to a preset policy on a lock screen interface; and after one application icon is selected and used for unlocking, directly entering an application interface corresponding to the selected application icon. With the present invention, a plurality of application icons selected by a user is displayed on the lock screen interface when the screen of the touch screen mobile phone is locked, so as to meet the requirement of the user for customizing an unlock interface and enable the user to reach an expected application interface rapidly after unlocking.

## Description

This application claims priority to Chinese Patent Application No. 201010605761.1, filed with the Chinese Patent Office on December 15, 2010 and entitled "METHOD FOR UNLOCKING TOUCH SCREEN MOBILE PHONE AND TOUCH SCREEN MOBILE PHONE", which is incorporated herein by reference in its entirety.

### FIELD OF THE INVENTION

The present invention relates to the field of mobile communication technologies, and in particular, to a method for unlocking a touch screen mobile phone and the touch screen mobile phone.

### BACKGROUND OF THE INVENTION

In recent years, a touch technology has been widely applied in mobile terminal markets and touch screen mobile phones have become a focus of competition of manufacturers. The most prominent characteristic of a touch screen mobile phone is its extra large screen which can bring a visual pleasure to a user and can show its advantages from the aspects of characters and images. To save the battery, the touch screen mobile phone provides the user with the functions of locking and unlocking a screen.

A method for unlocking a touch screen mobile phone in the prior art is: unlocking by sliding on the screen or by pressing a designated keyboard to enter the main interface of the mobile phone or the interface that the user exits before locking the screen.

During the implementation of the present invention, the inventor finds that the method for unlocking a touch screen mobile phone in the prior art has the following disadvantages: The method cannot meet the customization requirements of the user and the user cannot reach an expected application interface after unlocking the touch screen mobile phone.

### SUMMARY OF THE INVENTION

Embodiments of the present invention provide a method for unlocking a touch screen mobile phone and the touch screen mobile phone so as to realize the requirement for reaching an expected application interface after unlocking the touch screen mobile phone.

A method for unlocking a touch screen mobile phone includes:
when locking a screen of the touch screen mobile phone, displaying one or more application icons generated according to a preset policy on a lock screen interface; and
after one application icon is selected and used for unlocking, directly entering an application interface corresponding to the selected application icon.

A touch screen mobile phone includes:
an icon displaying module, configured to display one or more application icons generated according to a preset policy on a lock screen interface; and
an unlock processing module, configured to, after one application icon is selected and used for unlocking, directly enter an application interface corresponding to the selected application icon.

It can be seen from the technical solutions provided by the embodiments of the present invention that the embodiments of the present invention are capable of displaying a plurality of application icons selected by a user on the lock screen interface when locking the screen of the touch screen mobile phone so as to meet the requirement of the user for customizing the unlock interface and enable the user to reach the expected application interface rapidly after unlocking.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from the accompanying drawings without creative efforts.
FIG. 1 is a process flow chart of a method for unlocking a touch screen mobile phone according to Embodiment 1 of the present invention;
FIG. 2 is a process flow chart of a method for unlocking a touch screen mobile phone according to Embodiment 2 of the present invention;
FIG. 3 is a schematic diagram of a display mode set by a user for applications on a lock screen interface according to Embodiment 2 of the present invention;
FIG. 4 is a schematic diagram of moving an unlock icon onto an icon of an application to be used after unlocking according to Embodiment 2 of the present invention;
FIG. 5 is a schematic structural diagram of a touch screen mobile phone according to Embodiment 3 of the present invention; and
FIG. 6 is a schematic structural diagram of another touch screen mobile phone according to Embodiment 3 of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

To facilitate the understanding about the embodiments of the present invention, further description is made through several specific embodiments as examples with reference to the accompanying drawings, and each embodiment does not limit an embodiment of the present invention.

### Embodiment 1

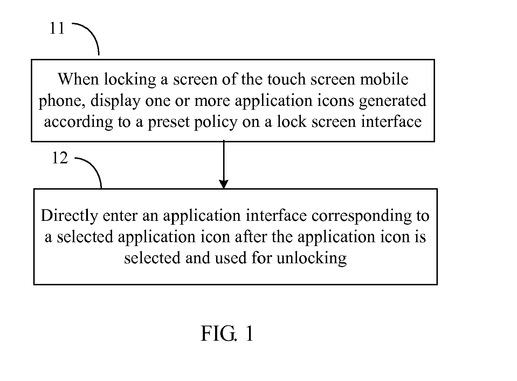

The process of a method for unlocking a touch screen mobile phone provided by the embodiment is shown in FIG. 1, including the processing steps as follows:
Step 11: When locking a screen of the touch screen mobile phone, display one or more application icons generated according to a preset policy on a lock screen interface.

Displaying one or more application icons generated according to a preset policy on a lock screen interface includes:
generating one or more icons of mostly used applications according to the historical usage times of each application, and displaying the generated one or more icons of mostly used applications on the lock screen interface;
   or
generating one or more icons of mostly used applications according to the usage times of each application used within a within a set period of time, and displaying the generated one or more icons of mostly used applications on the lock screen interface;
   or
generating one or more application icons according to applications used in a set period of time before locking the screen of the touch screen mobile phone, and displaying the generated one or more application icons on the lock screen interface;
   or
generating one or more application icons according to applications customized by a user, and displaying the generated one or more application icons on the lock screen interface.

Step 12: Directly enter an application interface corresponding to a selected application icon after the application icon is selected and used for unlocking.

The user selects one application icon from the one or more icon applications displayed on the lock screen interface, unlocks the touch screen mobile phone by operating the selected application icon, and directly enters the selected application interface.

Unlocking the touch screen mobile phone by operating the selected application icon may specifically be: moving an unlock icon on the lock screen interface onto the selected application icon; or sliding the selected application icon onto an unlock icon on the lock screen interface to unlock the touch screen mobile phone.

With the embodiment, a user can flexibly set application information which needs to be displayed on a lock screen interface, so that the requirement of the user for customizing an unlock interface can be satisfied. The requirement of the user for reaching an application interface expected by the user after unlocking can be satisfied.

### Embodiment 2

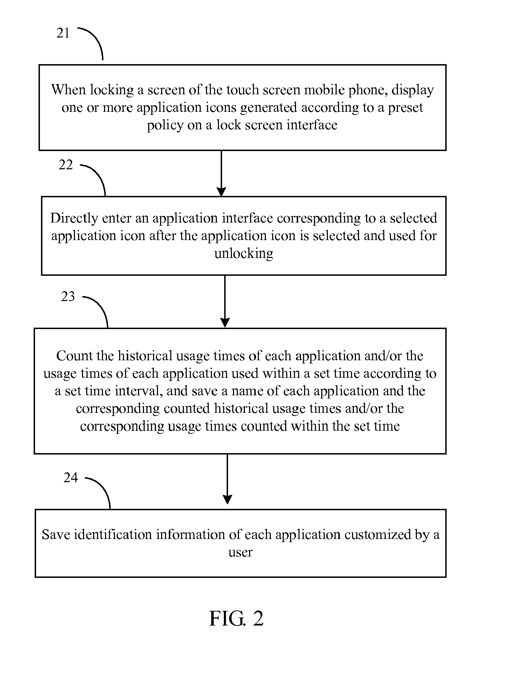

The process of a method for unlocking a touch screen mobile phone provided by the embodiment is shown in FIG. 2, including the processing steps as follows:
Step 21: When locking a screen of the touch screen mobile phone, display one or more application icons generated according to a preset policy on a lock screen interface.

According to actual needs, a user can set application information which needs to be displayed on the lock screen interface. The application information which needs to be displayed may be: one or more icons of mostly used applications in the history or within a within a set period of time, applications customized by a user, or recently used applications before the user locks the screen.

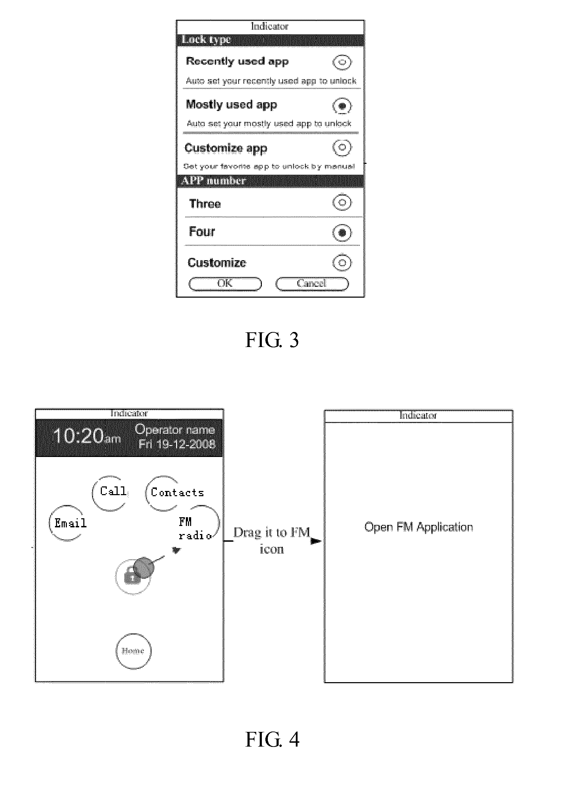

The schematic diagram of a display mode set by a user for applications on a lock screen interface according to the embodiment is shown in FIG. 3. The user first selects to display the Recently used app (recently used applications before locking the screen by the user), Mostly used app (mostly used applications), or Customize used app (applications customized by the user) on the lock screen interface, and then selects the number of the displayed application icons.

During the locking of the screen of the touch screen mobile phone, a CPU of the touch screen mobile phone generates one or more icons of mostly used applications according to the historical usage times of each application, and displays the generated one or more application icons on the lock screen interface according to the display mode set by the user for the applications on the lock screen interface; or, the CPU generates one or more icons of mostly used applications according to the usage times of each application used within a within a set period of time, and displays the generated one or more application icons on the lock screen interface; or, the CPU generates one or more application icons according to the applications used in a set period of time before the screen of the touch screen mobile phone is locked, and displays the generated one or more application icons on the lock screen interface; or, the CPU generates one or more application icons according to applications customized by a user, and displays the generated one or more application icons on the lock screen interface.

For example, if the user sets to display the mostly used applications on the lock screen interface, the CPU displays the icons of three applications mostly used in the history or within a within a set period of time on the lock screen interface.

For another example, if the user sets to display, on the lock screen interface, applications customized by the user, the CPU displays, on the lock screen interface, the icons of four applications customized by the user.

For another example, if the user sets to display recently used applications before locking the screen on the lock screen interface, the CPU displays the icons of two recently used applications in a set period of time before locking the screen on the lock screen interface.

Step 22: Directly enter an application interface corresponding to a selected application icon after the application icon is selected and used for unlocking.

When the user needs to unlock the screen, the user selects one icon of an application which needs to be used after unlocking from icons of various applications displayed on the lock screen interface. Then, the user moves an unlock icon on the lock screen interface onto the selected icon of the application which needs to be used after unlocking; or, the user slides the selected icon of the application which needs to be used after unlocking onto the unlock icon on the lock screen interface so as to realize unlocking and enter the interface of the selected application which needs to be used after unlocking.

The schematic diagram of moving the unlock icon onto the icon of the application which needs to be used after unlocking according to the embodiment is shown in FIG. 4: Four application icons displayed on the lock screen interface are Email, Call, Contacts, and FM radio application icons, respectively; by moving the unlock icon onto the FM radio application icon, the FM radio application icon can be immediately accessed after unlocking.

Step 23: Count the historical usage times of each application and/or the usage times of each application used within a within a set period of time according to a within a set period of time interval, and save a name of each application and the corresponding counted historical usage times and/or the corresponding usage times counted within the within a set period of time.

Count the historical usage times of each application and/or the usage times of each application used within a within a set period of time according to a within a set period of time interval.

Save a name of each application and the corresponding counted historical usage times and/or the corresponding usage times counted within the within a set period of time.

It should be noted that step 23 is an optional step which can be carried out before step 21, or carried out between step 21 and step 22, or carried out after step 22, which is not limited herein.

Step 24: Save identification information of each application customized by a user.

The touch screen mobile phone also provides a function for a user to customize an application; the user can set identification information of a customized application and the identification information includes information such as a name and/or an icon; the touch screen mobile phone saves information such as identification information of each application customized by the user.

It should be noted that step 24 is an optional step which can be carried out before step 21, or carried out between step 21 and step 22, or carried out after step 22, which is not limited herein. In addition, the sequence of step 23 and step 24 is not limited.

With the embodiment, a user can flexibly set application information which needs to be displayed on a lock screen interface, so that the requirement of the user for customizing an unlock interface can be satisfied. The requirement of the user for immediately reaching the expected application interface after unlocking can be satisfied; the applications expected by the user may be mostly used applications or applications customized by the user and/or applications recently used before locking the screen by the user.

### Embodiment 3

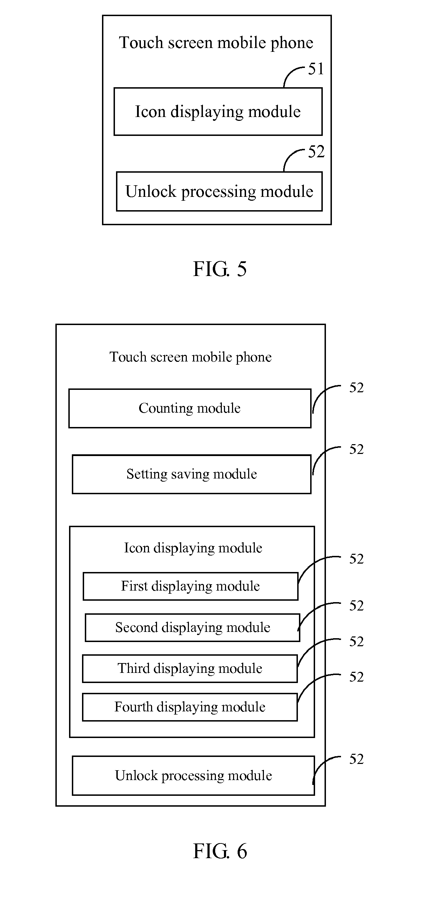

The embodiment provides a touch screen mobile phone as shown in FIG. 5, including the following modules:
an icon displaying module 51, configured to display one or more application icons generated according to a preset policy on a lock screen interface when a screen of the touch screen mobile phone is locked; and
an unlock processing module 52, configured to, after one application icon is selected and used for unlocking, directly enter an application interface corresponding to the selected application icon.

The embodiment further provides another touch screen mobile phone as shown in FIG. 6, including the following modules:
an icon displaying module 61, configured to display one or more application icons generated according to a preset policy on a lock screen interface when a screen of the touch screen mobile phone is locked; and
an unlock processing module 62, configured to, after one application icon is selected and used for unlocking, directly enter an application interface corresponding to the selected application icon.

Optionally, the touch screen mobile phone may further include:
a counting module 63, configured to count the historical usage times of each application and/or the usage times of each application used within a within a set period of time according to a within a set period of time interval, and save a name of each application and the corresponding counted historical usage times and/or the corresponding usage times counted within the within a set period of time.

Optionally, the touch screen mobile phone may further include:
a setting saving module 64, configured to save identification information of each application customized by a user.

Optionally, the icon displaying module 61 includes at least one of the following modules:
a first displaying module 611, configured to generate one or more icons of mostly used applications according to the historical usage times of each application, and display the generated one or more icons of applications on the lock screen interface;
a second displaying module 612, configured to generate one or more icons of mostly used applications according to the usage times of each application used within a within a set period of time, and display the generated one or more icons of applications on the lock screen interface;
a third displaying module 613, configured to generate one or more application icons according to the applications used in a set period of time before the screen of the touch screen mobile phone is locked, and display the generated one or more application icons on the lock screen interface; and
a fourth displaying module 614, configured to generate one or more application icons according to the applications customized by the user, and display the generated one or more application icons on the lock screen interface.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

To sum up, with the embodiments of the present invention, the requirement of the user for immediately reaching the expected application interface after unlocking can be satisfied; the applications expected by the user may be mostly used applications or applications customized by a user and/or applications recently used before the screen is locked by a user.

In the embodiments of the present invention, a user can flexibly set application information which needs to be displayed on a lock screen interface, so that the requirement of the user for customizing an unlock interface can be satisfied and the requirement of the user for rapidly reaching the application interface expected by the user after unlocking can be satisfied.

The foregoing description is merely about specific exemplary embodiments of the present invention, but is not intended to limit the protection scope of the present invention. Any variation or replacement figured out by persons skilled in the art within the technical scope disclosed in the present invention shall fall within the protection scope of the present invention. Therefore, the protection scope of the present invention shall be subject to the protection scope of the claims.

## Claims

1. A method for unlocking a touch screen mobile phone, comprising:
when locking a screen of the touch screen mobile phone, displaying one or more application icons generated according to a preset policy on a lock screen interface; and
after one application icon is selected and used for unlocking, directly entering an application interface corresponding to the selected application icon.

2. The method according to claim 1, wherein the method further comprises:
counting the historical usage times of each application and/or the usage times of each application used within a within a set period of time according to a within a set period of time interval, and saving a name of each application and the corresponding counted historical usage times and/or the corresponding usage times counted within the within a set period of time.

3. The method according to claim 1, wherein the method further comprises:
saving identification information of each application customized by a user.

4. The method according to any one of claims 1 to 3, wherein the displaying one or more application icons generated according to the preset policy on the lock screen interface comprises:
generating one or more icons of mostly used applications according to the historical usage times of each application, and displaying the generated one or more icons of mostly used applications on the lock screen interface; or
generating one or more icons of mostly used applications according to the usage times of each application used within a within a set period of time, and displaying the generated one or more icons of mostly used applications on the lock screen interface.

5. The method according to any one of claims 1 to 3, wherein the displaying one or more application icons generated according to the preset policy on the lock screen interface comprises:
generating one or more application icons according to applications used in a set period of time before locking the screen of the touch screen mobile phone, and displaying the generated one or more application icons on the lock screen interface.

6. The method according to any one of claims 1 to 3, wherein the displaying one or more application icons generated according to the preset policy on the lock screen interface comprises:
generating one or more application icons according to applications customized by the user, and displaying the generated one or more application icons on the lock screen interface.

7. A touch screen mobile phone, comprising:
an icon displaying module, configured to display one or more application icons generated according to a preset policy on a lock screen interface when a screen of the touch screen mobile phone is locked; and
an unlock processing module, configured to, after one application icon is selected and used for unlocking, directly enter an application interface corresponding to the selected application icon.

8. The unlocking apparatus of the touch screen mobile phone according to claim 7, wherein the touch screen mobile phone further comprises:
a counting module, configured to count the historical usage times of each application and/or the usage times of each application used within a within a set period of time according to a within a set period of time interval, and save a name of each application and the corresponding counted historical usage times and/or the corresponding usage times counted within the within a set period of time.

9. The unlocking apparatus according to claim 8, wherein the touch screen mobile phone further comprises:
a setting saving module, configured to save identification information of each application customized by a user.

10. The touch screen mobile phone according to any one of claims 7 to 9, wherein the icon displaying module comprises at least one of the following modules:
a first displaying module, configured to generate one or more icons of mostly used applications according to the historical usage times of each application, and display the generated one or more icons of mostly used applications on the lock screen interface;
a second displaying module, configured to generate one or more icons of mostly used applications according to the usage times of each application used within a within a set period of time, and display the generated one or more icons of mostly used applications on the lock screen interface;
a third displaying module, configured to generate one or more application icons according to applications used in a set period of time before the screen of the touch screen mobile phone is locked, and display the generated one or more application icons on the lock screen interface; and
a fourth displaying module, configured to generate one or more application icons according to applications customized by the user, and display the generated one or more application icons on the lock screen interface.
